# EUROPEAN PATENT APPLICATION

(11) **EP 2 415 842 A1**
(43) Date of publication of application: **08.02.2012**
(21) Application number: 10172153.8
(22) Date of filing: 06.08.2010
(51) Int. Cl.: C09D 5/00

(54) **Electrophoretic process for making coatings of a polymeric matrix composite material**

(71) Applicant: Elettroplast S.p.A., 25064 Gussago (BS) (IT)
(72) Inventor: Donina, Gianluca, 25064, Gussago (BS) (IT); Tosti, Michele, 25081, Bedizzole (BS) (IT); Bezzi, Federica, 48018, Faenza (RA) (IT); Blosi, Magda, 48018, Faenza (RA) (IT); Fabbri, Paride, 48018, Faenza (RA) (IT); Zanelli, Chiara, 48018, Faenza (RA) (IT); Mingazzini, Claudio, 48018, Faenza (RA) (IT); Dondi, Michele, 48018, Faenza (RA) (IT)
(74) Representative: Lunati & Mazzoni S.r.L.

(57) **Abstract**

It is provided an electrophoretic process (1) for making coatings (10) of a polymer-matrix composite material on at least one element to be coated (11), comprising a step (2) of dipping the element to be coated (11) into a bath (12) including bonding particles (13), suspended ceramic particles (15) and dispersant substances (16) adapted to ensure and improve the suspension stability of the ceramic particles (15) inside said bath (12), in a liquid matrix (14), and a deposition step (3), in which an electric field is applied inside the bath (12) by means of a first electrode (17) and a second electrode consisting of the element to be coated (11), the deposition step (3) being adapted to achieve migration and deposition of the bonding particles (13) on the element to be coated (11) and transport and co-deposition of the ceramic particles (15) onto the element to be coated (11).

## Description

The present invention relates to an electrophoretic process for making coatings of a polymer-matrix composite material, of the type pointed out in the preamble of the first claim.

Presently known are electrophoretic processes for coating deposition, in particular processes adapted to deposit electrophoretic paints.

In these processes, the objects to be coated or painted are dipped into a bath including bonding particles, in particular polymers including ionizable groups suspended in a liquid matrix.

Said bonding particles are polyacids or polybases for example, the chemical functions of which are salified so as to make them soluble in a liquid matrix consisting of a hydroalcoholic solution mainly including water.

Materials of an organic nature can be in addition included in the bath, such as in particular Teflon and various types of organic dyes.

The process contemplates application of an electric field inside the bath by means of two electrodes one of which consists of the object to be coated that must be conductive or made conductive. The process is defined as anodic or cathodic depending on whether the object constitutes the anode or cathode, respectively. Said electric field causes migration of the bonding particles on an electrode, in particular the electrode consisting of the object to be coated.

The bonding particles, in addition, chemically react with the electrode itself giving rise to a layer which is substantially insoluble in the liquid matrix and constitutes the coating.

The increase in the coating thickness on the electrode induces the electric insulation of same, progressively reducing the speed of a further particle deposition on the already covered areas. In this step a deposit is created also in the innermost regions, that at the beginning have lower current intensities.

During deposition of the bonding particles also said organic pigments contained in the bath such as Teflon and the organic dyes are co-deposited.

Finally, by means of an electroosmosis phenomenon, the water is ejected from the coating, so as to leave a compact and sticking coating on the object.

The processes involving cathodic electrophoretic deposition, also referred to as cathophoretic deposition, are to be preferred to the corresponding anaphoretic deposition, in particular because the possible drawback of dissolution of the metal to be coated is not encountered. Therefore these processes are frequently applied in particular in the automotive industry.

Therefore many different resins are present on the market that are suitable for cathaphoretic application, starting from the acrylic and methacrylic esters, styrene, vinyl-esters and vinyl-ethers, all modified in a manner adapted to contain secondary or tertiary amino groups.

In particular, the epoxy resins are those most commonly used due to their features of resistance to corrosion, resistance to the action of various chemical agents, and to their tendency to form stable bonds with the amino groups.

The electrophoretic processes finally comprise further steps of preparation and cleaning of the electrode in the step preceding coating, and of washing, baking and polymerisation in the step following coating.

The known art mentioned above has some important drawbacks.

In fact, through said electrophoretic processes it is possible to obtain coatings only from a reduced number of organic substances or the like.

In addition, the further pigments that can be co-deposited with the bonding particles can only be of an organic nature and only used for anodic processes that, as pointed out, often have restrictions.

Another problem is represented by the high cost and high times typical of the known electrophoretic processes. These problems are substantially due to the slowness of the process itself and to the limited number of obtainable pieces before the solution containing the particles to be deposited deteriorates.

A further problem concerns the products that are coated following this process, which products, since their physico-mechanical features are not high, do not show a sufficient resistance to corrosion and tend to transfer heavy metals if immersed in a solution, water for example, causing pollution of this solution.

Still other problems consist in that some coatings comprise particles dispersed in an unhomogeneous manner or having to be introduced in important amounts. Such a problem is present in the process described in patent US-B-3,531,391, for example.

Under this situation, the technical task underlying the present invention is to conceive an electrophoretic process for making coatings of a polymer-matrix composite material capable of substantially obviating the mentioned drawbacks.

Within the scope of this technical task, it is an important aim of the invention to obtain an electrophoretic process for making coatings of a polymer-matrix composite material enabling a wider range of particles or powders, also inorganic, to be deposited, and in particular ceramics also in reduced amounts. Another aim of the invention is to conceive an electrophoretic process that is quick and also of low cost.

A further aim is to obtain a process enabling accomplishment of a cheap coating having high physico-mechanical features. In particular, the invention aims at conceiving an electrophoretic process adapted to obtain a coating characterised by a low brittleness.

The technical task mentioned and the aims specified are achieved by an electrophoretic coating-deposition process as described in the appended Claim 1.

Preferred embodiments are highlighted in the sub-claims.

The features and advantages of the invention are hereinafter clarified by the detailed description of a preferred embodiment of the invention, with reference to the accompanying drawings, in which:

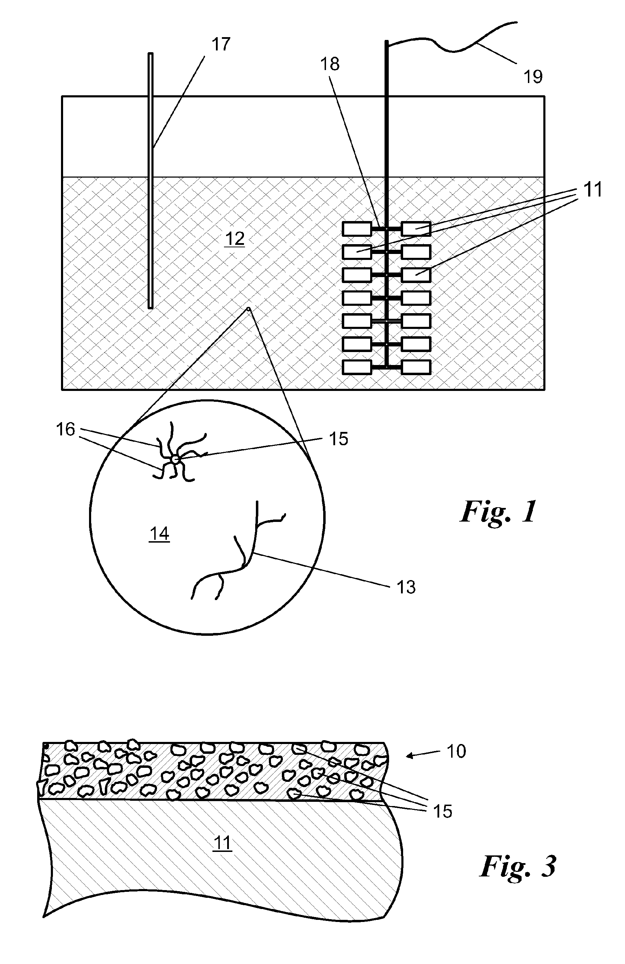

**Fig. 1** diagrammatically shows an apparatus for carrying out an electrophoretic process according to the invention;

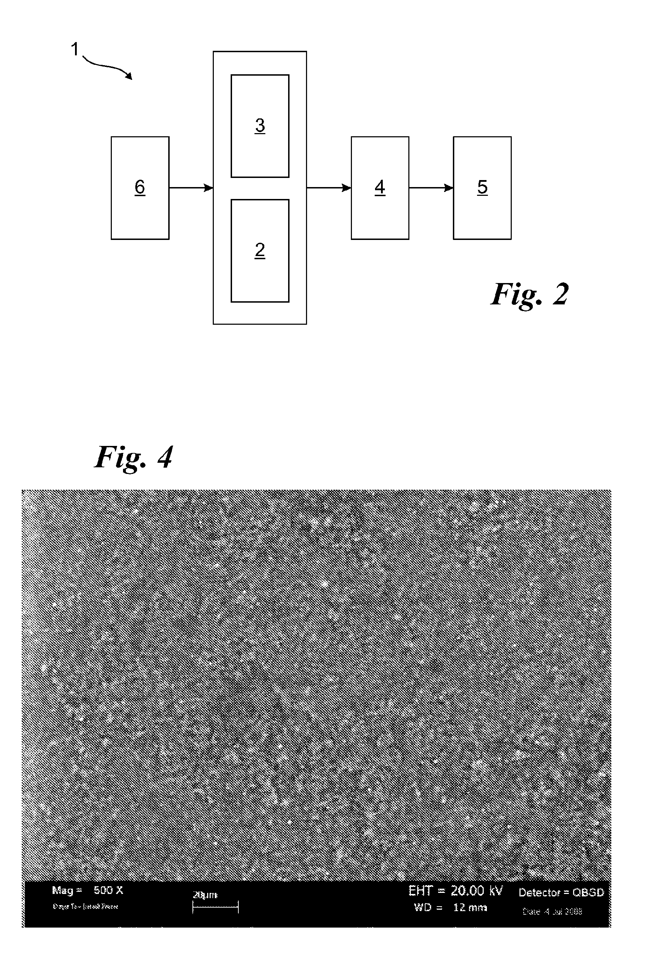

**Fig. 2** is a block diagram of the electrophoretic process;
**Fig. 3** shows an enlarged view of a process; and
**Fig. 4** shows a magnification to the microscope of a surface obtained through the electrophoretic process according to the invention.

With reference to the mentioned figures, the electrophoretic coating-deposition process according to the invention is generally identified by reference numeral **1.**

It can be both of the anodic and the cathodic type and is adapted to enable accomplishment of coatings **10** on at least one element or article of manufacture to be coated **11.** In detail, the coating 10 is of a composite material, i.e. a material consisting of the assembly of two or more substances that at a macroscopic and structural level remain separated and distinct. More specifically, coating 10 is of a polymer matrix-composite material, as better pointed out in the following.

The elements to be coated 11 are of electrically conductive materials, in particular metal materials, or non electrically conductive materials, such as polymers that are made conductive through metal or other additions.

Process 1 briefly comprises a step **2** of dipping the elements to be coated 11 into a bath **12** including bonding particles **13** suspended in a liquid matrix **14,** preferably substantially consisting of one or more alcoholic solvents such as alcohols or polyalcohols possibly modified by ether groups such as 2-(hexyloxy)ethanol and 1-methoxy-2-propanol and wherein the minimum amount of water is 50%.

In particular the bonding particles 13 consist of polyelectrolytes, polyacids or polybases the chemical functions of which are salified so that the same are soluble in a liquid matrix 14 mainly comprising water.

The bonding particles 13 are further preferably present in mass percentages substantially included between 10% and 15% of the overall mass of the bath 12.

Substantially, the particles 13 and matrix 14 are known by themselves and used in known amounts and percentages in the electrophoretic coating or painting processes, in particular in the cathaphoretic coating processes.

The bath 12 further advantageously comprises suspended ceramic particles (or pigments) **15** in particular consisting of ceramics such as oxides, carbides, ionic solids, covalent materials and others and preferably having sizes in the order of magnitude substantially included between 20 nm and 200 µm and, more preferably, practically included between 0.1 µm and 10 µm.

In particular, in order to give the electrophoretic process 1 more stability, the ceramic particles 15 used are preferably and advantageously oxides and, more preferably oxides to a single stable oxidation stage. In detail, identified by the expression "single stable oxidation stage" are the ceramic particles 15 that are able to have a single stable oxidation condition, i.e. oxides that, among all possible oxidation stages belonging to the ceramic particle 15, have only one stable stage. The ceramic particles 15 utilised can therefore be aluminium oxide (Al2O3), boehmite (AlOOH), zirconium oxide (Zr02), silicon oxide (Si02), titanium oxide (Ti02) or other similar oxides meeting said stability and atoxicity features.

Alternatively, carbides and preferably silicon carbide (SiC), zirconium carbide (ZrC) and boron carbide (B4C) or other non-oxide and atoxic materials can be used as the ceramic particles 15.

The ceramic particles 15 are preferably present in mass percentages smaller than or almost equal to 6% of the overall mass of bath 12.

These ceramic particles 15 used are advantageously atoxic, i.e. they do not have dangerous temporary or permanent effects on a user of the element to be coated 11 treated in accordance with process 1.

In addition to the above components, bath 12 comprises dispersant substances **16** adapted to ensure and improve the suspension stability of the ceramic particles 15 inside bath 12 and, more specifically, of the liquid matrix **14,** preferably through a stabilisation of the steric type.

This steric stabilisation consists in the adsorption on particles 15 of dispersant substances 16 having a high steric bulkiness capable of increasing stability and preventing flocculation, i.e. formation of a colloidal system wherein the solid phase has a tendency to separate forming suspended flocs. In detail, the steric stabilisation is obtained by virtue of the particular chemical structure of the dispersant substances 16 in which two components can be identified: a first component, called stabiliser, that is soluble in the liquid matrix 14; and a second component, called "anchor element", that is insoluble but adapted to become steadily attached to the ceramic particle 15 that is therefore maintained to a suspended state in bath 12.

These particular dispersant substances 16, in addition to said suspension time, enable an easy and quick redispersion of the ceramic particles 15 if an undesired deposition of said ceramic particles 15 occurs. In detail, this redispersion can be obtained through a simple and quick stirring up of bath 12. In addition to the above mentioned steric stabilisation, the dispersant substances 16 are adapted to perform said function of stabilising the ceramic particles 15 causing an increase of the so-called "ξ potential" (or zeta potential), expression of the electric potential on the surface of the suspended particles.

The dispersant substances 16 are made up of any material adapted to perform the above mentioned functions and, in detail, can comprise at least anyone of the two following types: polyelectrolytes, inorganic additives.

The polyelectrolytes are electrostatically charged polymers, more frequently of a negative sign, capable both of increasing the ξ potential and giving the particles 15 a steric stabilisation.

The inorganic additives can consist both of nanoparticles and of complexing species having a negative or positive charge, and are able to electrostatically interact with the ceramic particles and increase the ξ potential.

Preferably, the dispersant substances 16 comprise polymer additives, consisting of non-electrostatically charged water-soluble substances having adsorbing functions on the ceramic particles 15 and able to provide said steric stabilisation to the suspension, improving the dispersion and inhibiting formation of aggregates.

More preferably, the dispersant substances 16 advantageously comprise vinyl polymers.

In detail, the dispersant substances 16 are therefore vinyl polymers characterised by terminal hydroxyl groups making them easily soluble in bath 12 and, in particular, in the liquid matrix 14 thus ensuring a high dispersion degree. In addition, these preferred dispersant substances 16 are characterised by an advantageous chemical interaction with the ceramic particles 15 causing a fruitful steric stabilisation. In fact, the vinyl polymers are adapted to bond with the surface of particles 15 due to the interaction of the electronic doublets present on oxygen and/or nitrogen. In this manner the ceramic particles 15 are bonded to the functional groups of these dispersant substances 16 and, due to the steric bulkiness typical of the vinyl polymer chains, are sterically stabilised, i.e. conveniently spaced apart and dispersed and with a low chance of aggregation and subsequent settling. In particular, used in a very advantageous manner can be polyvinyl pyrrolidone and polyvinyl alcohols.

The vinyl polymers used as the dispersant substances 16 therefore preferably have molecular mean masses included between 10 000 u and 100 000 u. The vinyl polymers with these molecular masses have optimal lengths capable of dispersing the ceramic particles 15 in an optimal manner.

The dispersant substances 16 and, more specifically, the vinyl polymers are present in percentages practically included between 0.1% and 2% with respect to the overall mass of bath 12 and, in particular, included between about 0.5% and about 1.8%.

Use of the dispersant substances 16 comprising vinyl polymers provides a suspension time of the ceramic particles 15 at least equal to twelve months and, preferably, exceeding twelve months.

Furthermore, these dispersant substances 16, in addition to said suspension time, enable an easy and quick redispersion to be obtained after an undesired deposition. In detail this redispersion can be obtained through a simple and quick stirring up of bath 12.

Alternatively, a plurality of different types of dispersant substances 16 as previously described can be provided, which can be present in overall amounts approaching the above stated amounts as regards the polymer dispersant substances 16.

Finally, bath 12 comprises organic acids and preferably lactic acid, adapted to bring the pH to values substantially included between 3 and 7, more preferably included between about 3.5 and 4.5 and most preferably substantially included between 3.8 and 4.2 and to improve the suspension stability.

An advantageous alternative solution consists of an electrophoretic process involving anaphoresis in which the element to be coated 11 is the positive electrode and in which bath 12 comprises pH correctors, preferably of the inorganic nature, adapted to bring the pH to values substantially included between 7 and 10.

Process 1 then comprises a deposition step **3.**

In said deposition step 3 an electric field is applied inside bath 12 by means of a first electrode **17** and a second electrode made up of the elements to be coated 11.

In this connection, it is to be noted that elements 11 are connected to a suitable frame **18** and an electric connection **19** adapted to give the elements 11 an electric potential which is preferably negative as the process is preferably a cathaphoresis process.

Preferably, voltages substantially included between 50 V and 300 V are applied.

The deposition step 3 is the same as the deposition step used in known coating or electrophoretic painting processes.

The electric field causes migration of the bonding particles 13 that are deposited on the electrode consisting of elements 11.

During deposition of the bonding particles 13, also the ceramic particles 15 preferably combined with the dispersant substances 16 are co-deposited, i.e. deposited and carried together.

In addition, the bonding particles 13 chemically react with the elements 11 giving rise to the coating 10 substantially insoluble in the liquid matrix. Furthermore, coating 10 at least partly incorporates the ceramic particles 15 forming said coating of composite material. In addition, this coating is substantially made up of the bonding particles 13 constituting the matrix of the composite material and the ceramic particles 15 constituting the reinforcement of the composite material.

As the coating is being formed, it electrically insulate the elements 11, reducing the deposition speed and penetrating into the regions having lower current density, thus going on incorporating ceramic particles 15.

It has been also found, through the analysis of the "argument of the dynamic mobility" that the vinyl polymer dispersant substances 16 give the ceramic particles 15 and, in particular, those particles having a stable oxidation stage, a high dynamic stability improving the deposition and enabling homogeneous coatings 10 to be obtained, without the baths being required to be submitted to decantation. This aspect is very advantageous from an industrial point of view because it allows the procedure of preparation of baths 12 to be accelerated. Process 1 can further comprise a subsequent rinsing step **4** applied to the coated elements **4** and a polymerisation step **5** of coating 10.

This polymerisation step 5 can comprise thermal treatments to temperatures substantially included between 120°C and 180°C or photopolymerisation processes or still others. But thermal treatments maintain a matrix polymeric and therefore are made at temperatures generally lower than 300°C.

Finally, process 1 can comprise preparation steps **6,** preceding the dipping step 2 and known by themselves.

The process according to the invention achieves important advantages.

In fact, the coating 10 including ceramic particles 15 improves the physicochemical strength of elements 11 as compared with the elements coated with known electrophoretic deposition processes.

In particular, as proved from studies and experiments carried out by the Applicant, the ceramic particles 15, due to their high stickiness and the presence of paints, offer a high protection against transfer of heavy metals to the elements 11.

Moreover, the ceramic particles 15 can give elements 11 original aesthetic and mechanical features, such as, by way of a non exhaustive explanation: chromatic and optical effects (e.g. colour, phosphorescence, fluorescence, metameric effects, iridescent effects); high resistance to abrasion, high resistance to corrosion and others.

The electrophoretic process 1 therefore allows a composite-material coating 10 to be obtained which includes ceramic particles 15 immersed in a matrix of bonding particles 13, characterised by high mechanical features. In detail, coating 10 has reduced brittleness, unlike a coating of ceramic material for example, obtained by sintering.

In addition, the ceramic particles 15 can be deposited by a cathaphoresis process allowing the surface of elements 11 to be further protected.

A further advantage resides in the reduced amount of ceramic particles 15 enabling lower costs and increasing the speed and quality of the electrophoretic process 1.

This advantage is substantially due to the optimal dispersion ensured by the presence of the particular dispersant substances 16 used and to the fact that particles 15 have a single stable oxidation state.

Said high dispersion is also obtained by virtue of the steric stabilisation resulting from the presence of dispersant substances 16 containing vinyl polymers. In fact, the steric stabilisation, compared with the electrostatic and charge stabilisation currently used, is unaffected by possible electrolytes, efficient both in aqueous dispersions and in non-aqueous dispersions, and both to low and high temperatures. Finally, this particular steric stabilisation enables a possible flocculation to be reversible.

In detail, use of dispersant substances comprising vinyl polymers gives a suspension time equal to and even exceeding twelve months.

The high dispersion allows a deposit of high quality to be obtained which is characterised by valuable aesthetic effects. In detail, process 1 enables the known mat effect to be obtained or semitransparent or even transparent deposits to be achieved.

Another important advantage of the electrophoretic process 1 is the possibility of making coatings 10 containing ceramic particles 16 without thermal treatments being required, which treatments can damage the mechanical features of the element to be coated 11, as in sintering occurs, for example. In detail, in process 1 temperatures substantially included between 120°C and 180°C are reached, while in sintering the temperatures that are reached are of several hundreds of degrees and can even exceed 1000°C.

The invention is susceptible of variations, all falling within the inventive idea. All of the details can be replaced by equivalent elements and the materials, shapes and sizes can be of any nature and magnitude.

## Claims

1. An electrophoretic process (1) for making coatings (10) of a polymer-matrix composite material on at least one element to be coated (11), comprising: a step (2) of dipping the element to be coated (11) into a bath (12) including bonding particles (13) suspended in a liquid matrix (14) and suspended ceramic particles (15), a deposition step (3), in which an electric field is applied inside said bath (12) by means of a first electrode (17) and a second electrode consisting of the element to be coated (11), said deposition step (3) achieving migration and deposition of said bonding particles (13) on said element to be coated (11) and consequent transport and co-deposition of said ceramic particles (15) onto the element to be coated (11), **characterised in that** said bath (12) further comprises dispersant substances (16) adapted to ensure and improve the suspension stability of said ceramic particles (15) inside said bath (12).

2. An electrophoretic process (1) as claimed in claim 1, wherein said dispersant substances (16) are adapted to stabilise said ceramic particles (15) by means of a steric stabilisation.

3. An electrophoretic process (1) as claimed in one or more of the preceding claims, wherein said dispersant substances (16) comprise vinyl polymers.

4. An electrophoretic process (1) as claimed in the preceding claim, wherein said vinyl polymers preferably have molecular mean masses substantially included between 10000 u and 100000 u.

5. An electrophoretic process (1) as claimed in one or more of the preceding claims, wherein said dispersant substances (16) are present in percentages substantially included between 0.1% and 2% with respect to the overall mass of said bath (12).

6. An electrophoretic process (1) as claimed in one or more of the preceding claims, wherein said ceramic particles (15) are oxides having a single stable oxidation stage.

7. An electrophoretic process (1) as claimed in one or more of the preceding claims, wherein said ceramic particles (15) are present in mass percentages smaller than or almost equal to 6% of the overall mass of said bath (12).

8. An electrophoretic process (1) as claimed in one or more of the preceding claims, wherein said ceramic particles (15) have sizes substantially included between 0.1 µm and 10 µm.

9. An electrophoretic process (1) as claimed in one or more of the preceding claims, wherein during said deposition step (3) said element to be coated (11) constitutes the negative electrode and wherein said bath (12) comprises pH-correctors adapted to bring the pH to values substantially included between 3 and 7.

10. An electrophoretic process (1) as claimed in one or more of the preceding claims, wherein during said deposition step (3) said element to be coated (11) constitutes the positive electrode and wherein said bath (12) comprises pH-correctors adapted to bring the pH to values substantially included between 7 and 10.

11. An electrophoretic process (1) as claimed in one or more of the preceding claims, comprising a polymerisation step (5) of said coating.

12. A coating (10) of polymer-matrix composite material made through the process as claimed in one or more of the preceding claims.
